# EUROPÄISCHE PATENTANMELDUNG

(11) **EP 4 428 256 A1**
(43) Veröffentlichungstag der Anmeldung: **11.09.2024**
(21) Anmeldenummer: 23160155.0
(22) Anmeldetag: 06.03.2023
(51) Int. Cl.: C22B 3/44, C01D 15/02, C01D 15/08, C22B 7/00, C22B 3/00, C22B 26/12, H01M 10/54

(54) **VERFAHREN UND ANLAGE ZUR GEWINNUNG ODER RÜCKGEWINNUNG VON METALLEN**

(71) Anmelder: Aurubis AG, 20539 Hamburg (DE)
(72) Erfinder: SURIANO, Anne-Marie, 22303 Hamburg (DE); BRYSON, Leslie James, 22609 Hamburg (DE); ESCHEN, Marcus, 48308 Senden (DE)
(74) Vertreter: Müller Verweyen

(57) **Zusammenfassung**

Die Erfindung betrifft ein Verfahren zur Gewinnung oder Rückgewinnung von Metallen aus einem liquiden Ausgangsstoff mit den folgenden Schritten:
Bereitstellung eines liquiden Ausgangsstoffs, der ungelöstes und/oder gelöstes Ni sowie Co und/oder Mn in Lösung und/oder Suspension enthält;
Einstellen eines pH-Werts des Ausgangsstoffs im Bereich von 2 bis 4;
Dosierung von Ozon als Oxidationsmittel zu dem Ausgangsstoff, während der Ausgangsstoff mit einer Scherrate von größer als 11000s⁻¹ in dem Ausgangsstoff gerührt wird;
Filtrieren und Abtrennen des Rückstands, der Co-Oxide und/oder Mn-Oxide enthält, von dem Filtrat, das gelöstes Ni enthält. Die Erfindung betrifft weiterhin eine korrespondierende Anlage.

## Beschreibung

Die Erfindung betrifft ein Verfahren zur Gewinnung oder Rückgewinnung von Metallen sowie eine korrespondierende Anlage.

Die weltweite Batterieproduktion weist sehr hohe Wachstumsraten auf. Der Bedarf der für die Produktion benötigten Ressourcen, nämlich Rohstoffe wie Lithium, Graphit und insbesondere Metalle wie Nickel, Kobalt und Mangan, wird dementsprechend ansteigen. Die benötigten Metalle werden hauptsächlich aus primären Quellen wie Erzen gewonnen. Hierbei treten beispielsweise einige Metalle häufig in Kombination mit anderen Metallen auf. Beispielsweise tritt Kobalt in verschiedenen Erzen in Kombination mit Nickel oder Kupfer auf. Auch in sekundären Quellen aus dem Recycling, bei denen es sich z.B. um Lithium-Ionen-Batterien am Ende ihrer Lebensdauer oder um Materialien und ganzen Batterien handeln kann, die in einem Produktionsprozess aussortiert wurden, treten z.B. Nickel, Kobalt, Mangan häufig in Kombination auf.

Sowohl primäre als auch sekundäre Quellen werden zu einer Ausgangsmasse aufbereitet. Dementsprechend können beispielsweise Erze und/oder ein Gemisch aus Lithium-Ionen-Batterieschrott und/oder Schrott aus Batterieproduktionsprozessen zu einem feinen Pulver verarbeitet werden, das die Ausgangsmasse eines Ausgangsstoffs für die Gewinnung oder Rückgewinnung bildet.

Im Stand der Technik sind verschiedene Verfahren zur Rückgewinnung derartiger Metalle aus einer Ausgangsmasse bekannt. Neben pyrometallurgischen Verfahrensrouten sind mehrere hydrometallurgische Verfahrensrouten bekannt.

So ist beispielsweise aus der EP 3431618 A1 ein Verfahren bekannt, bei dem Lithium-Ionen-Batterieschrott mit einem sich anschließenden Al-Entfernungsschritt, gefolgt von einem Fe-Entfernungsschritt, gelaugt wird. Danach wird ein Schritt zur Rückgewinnung von Ni und Co durchgeführt, so dass am Ende des Prozesses Li extrahiert werden kann. Ni und Co werden nacheinander einer Lösungsmittelextraktion unterzogen.

In der WO 2020/212587 A1 wird ein Verfahren offengelegt, bei dem Lithium vor dem Rückgewinnungsprozess für Ni und Co extrahiert wird, wobei Ni und Co gemeinsam auskristallisiert werden.

Die Gewinnung derartiger Metalle aus primären Quellen und die Rückgewinnung aus sekundären Quellen bietet sowohl energetisch als auch umwelttechnisch Verbesserungspotential. Die Trennung von unterschiedlichen Metallen, die häufig gemeinsam auftreten, wie Ni und Co, stellt dabei eine besondere Herausforderung dar.

Die Aufgabe der Erfindung ist es, ein kosteneffizientes Verfahren zur Gewinnung oder Rückgewinnung von unterschiedlicher Metallen aus einer Ausgangsmasse bereitzustellen, das eine hohe Extraktionsrate und Selektivität für die gewonnenen oder zurückgewonnenen Metalle ermöglicht.

Die Erfindung löst dieses Problem mit den Merkmalen der unabhängigen Ansprüche.

Es wird ein Verfahren zur Gewinnung oder Rückgewinnung von Metallen aus einem liquiden Ausgangsstoff mit den folgenden Schritten in der folgenden Reihenfolge vorgeschlagen:
- Schritt (a): Bereitstellung eines liquiden Ausgangsstoffs, der ungelöstes und/oder gelöstes Ni sowie Co und/oder Mn in Lösung und/oder Suspension enthält;
- Schritt (b): Einstellen eines pH-Werts des Ausgangsstoffs im Bereich von 2 bis 4;
- Schritt (c): Dosierung von Ozon als Oxidationsmittel zu dem Ausgangsstoff, während der Ausgangsstoff mit einer Scherrate von größer als 11000s⁻¹ in dem Ausgangsstoff gerührt wird;
- Schritt (d): Filtrieren und Abtrennen des Rückstands, der Co-Oxide und/oder Mn-Oxide enthält, von dem Filtrat, das gelöstes Ni enthält.

Das vorgeschlagene Verfahren ermöglicht eine sehr effektive Trennung von Ni (Nickel) gegenüber Co (Kobalt) und/oder Mn (Mangan), die zusammen in einem Ausgangsstoff vorliegen. Dementsprechend können Co und/oder Mn sehr einfach als ausgefallene Co- und/oder Mn-Oxide von dem gelösten Ni abgetrennt werden. Die Co- und Mn-Oxide können anschließend in dieser Form einer Weiterverarbeitung zugeführt werden.

Ozon als starkes Oxidationsmittel mit einem Redoxpotential von > 850 mV oxidiert Co und Mn und ist für die Rückgewinnung nicht darauf angewiesen, dass diese bereits im Co(III)- und Mn(IV)-Zustand vorliegen, so dass Ausgangsstoffe aus unterschiedlicher Mineralogie und Vorbehandlung erfolgreich verarbeitet werden können.

Mit dem Verfahren kann eine breite Auswahl von primären und sekundären Quellen und auch unterschiedlichen Vorbehandlungen des Ausgangsstoffs verarbeitet werden, wobei dennoch eine hohe Effizienz des Verfahrens erreicht werden kann.

Der liquide Ausgangsstoff kann beispielsweise eine gemahlene Ausgangsmasse, z.B. Batterieschrott oder Erze, in Wasser sein. Dementsprechend kann der Ausgangsstoff beispielsweise eine Suspension sein, in dem Ni und Co und/oder Mn als Feststoffe, vorliegen, wobei die Feststoffe vorzugsweise klein zerkleinert oder gemahlen sind.

Dementsprechend wird in einer vorteilhaften Ausführungsform vorgeschlagen, dass in Schritt (a) Ni-haltiges Erz mechanisch zerkleinert wird, vorzugsweise zu einem Pulver zerkleinert wird. Ni-haltiges Erz weist in Regel Anteile von Co auf, wobei neben Co auch Mn zusätzlich auftreten kann. Ni-haltige Erze können auch Mn enthalten und weitgehend frei von Co sein. Ni-haltiges Erz stellt eine primäre Quelle von Ni dar. Die mechanische Zerkleinerung des Ni-haltigen Erzes vergrößert die zur Verfügung stehende Oberfläche, so dass das vorgeschlagene Verfahren eine effiziente Trennung von Ni und Co und/oder Mn erreicht.

In alternativen Ausführungsformen kann Material aus sekundären Quellen, d.h. aus Recyclingprozesses, beispielsweise Batterieschrott oder sog. schwarze Masse, zur Bereitstellung des liquiden Ausgangsstoff gemäß Schritt (a) dienen.

Das zudosierte Ozon oxidiert beispielsweise Co(II) und Mn(II) zu Co(III) und Mn(IV), wodurch Co(III)- und Mn(IV)-Oxide ausfallen. Daher kann unabhängig vom Ausgangszustand nach längerer Prozessdauer Co und Mn vollständig ausfallen. Dagegen nimmt der Anteil von gelöstem Ni mit einer längeren Prozessdauer bei dem genannten pH-Wert stetig zu.

In einer vorteilhaften Ausführungsform kann der liquide Ausgangsstoff beispielsweise vorher im Rahmen des Schritts (a) einem sauren Laugungsschritt, beispielsweise mit einem pH-Wert unter 3, weiter vorzugsweise unter 2, unterzogen worden sein, so dass Ni und Co und/oder Mn in Lösung vorliegen. Insbesondere ein pH-Wert unter 2 erlaubt eine schnelle und vollständige Auslaugung von Ni. In dem sauren Laugungsschritt wird mindestens eine Säure, vorzugsweise Schwefelsäure (H₂SO₄), zugegeben. Weiterhin wird in dem sauren Laugungsschritt vorzugsweise ein Reduktionsmittel, vorzugsweise Schwefeldioxid (SO₂), zugegeben.

Insgesamt ermöglicht das Verfahren beispielsweise eine Gewinnung oder Rückgewinnung von mehr als 95% des Co und/oder mehr als 99% des Mn aus dem Ausgangsstoff im Rückstand, wobei weniger als 3% des Ni aus dem Ausgangsstoff im Rückstand vorhanden sind. In Bezug auf Schritt (d) ermöglicht das Filtrat des vorgeschlagenen Verfahrens das Abtrennen von in Säure gelöstem Ni.

In Schritt (c) des vorgeschlagenen Verfahrens wird Ozon als Oxidationsmittel in die Lösung dosiert, während die Suspension gerührt wird. Vorzugsweise wird Ozon in dem Wasser der Lösung gelöst. Ozon (O₃) ist als starkes Oxidationsmittel bekannt. Die Verwendung von Ozon als Oxidationsmittel ist jedoch mit einigen Nachteilen verbunden, da Ozon gegenüber Disauerstoff instabil ist und sich schnell zersetzt. Die Halbwertszeit von Ozon verringert sich weiter, wenn es in Wasser gelöst wird, und sie verringert sich mit steigender Temperatur noch weiter, was im Stand der Technik zu einer sehr geringen Effizienz des Verfahrens führt und sogar dazu führen kann, dass das Ozon nicht in der beabsichtigten Weise reagiert, wenn es bei hohen Temperaturen in Wasser gelöst wird. Die Löslichkeit von Ozon in Wasser ist sehr gering.

Es hat sich gezeigt, dass durch Rühren der Lösung mit der vorgeschlagenen Scherrate der Stoffaustausch so weit erhöht werden kann, dass das Ozon mit den entsprechenden Metallen in der Suspension und/oder Lösung reagieren kann, bevor sich das Ozon zersetzt. Der effektive Einsatz von Ozon beginnt bei dementsprechend hohen Scherraten und wird bei weiter erhöhten Scherraten noch effektiver, so dass sehr hohe Oxidationspotentiale (>850 mV) erzeugt werden können.

Daher wird vorgeschlagen, dass die Lösung mit einer Scherrate von größer 11000s⁻¹ gerührt wird, während Ozon als Oxidationsmittel in die Lösung dosiert wird. Vorzugsweise wird in Schritt (b) ein Oxidations-/Reduktionspotenzial (ORP) von >850 mV erzeugt, indem der Lösung Ozon zudosiert wird, während die Lösung gerührt wird. Das ORP kann durch sehr intensives Rühren während des Schritts (b) mit einer noch höheren Scherrate weiter auf >1200 mV erhöht werden.

Eine hohe Scherrate, insbesondere über 11000s⁻¹, beispielsweise 12000s⁻¹, erhöht den Stoffaustausch in ausreichendem Maße, so dass Ozon mit dem den entsprechenden Metallen im Ausgangsstoff reagieren kann, bevor es sich zersetzt. Bei einer Scherrate von über 11000s⁻¹, beispielsweise 12000s⁻¹, kann ein ausreichend hohes ORP erreicht werden.

Beispielsweise kann eine Scherrate in einem Fluid zwischen zwei parallelen Platten durch die relative Geschwindigkeit der beiden Platten geteilt durch den Abstand der Platten bestimmt werden.

Ozon ist in dieser Anwendung ein sehr günstiges Oxidationsmittel im Vergleich zu alternativen Oxidationsmitteln.

Es wird ferner vorgeschlagen, dass durch Rühren der Suspension während Schritt (c) eine turbulente Strömung in dem Ausgangsstoff erzeugt wird.

Vorzugsweise liegt das Rühren mit der vorgeschlagenen hohen Scherrate über einem Schwellenwert, über dem der Anteil des Ozons, der mit dem Ausgangsstoff reagieren kann, größer ist als der Anteil des Ozons, der sich vorzeitig im Schritt (c) zersetzt.

Der gemäß Schritt (a) bereitgestellte liquide Ausgangsstoff weist vorzugsweise einen Li-Anteil von weniger als 0,01%, z.B. weniger als 100 mg Li pro Liter, weiter vorzugsweise weniger als 0,005% in der Masse des liquiden Ausgangsstoffs auf, wobei der Ausgangsstoff besonders vorzugsweise kein Li enthält.

Es wird weiter vorgeschlagen, dass in Schritt (c) Ozon mit einer Rate von mindestens 0,1 Gramm(O₃)/Stunde/Gramm(Metalle), zum Beispiel 1 Gramm(O₃)/Stunde/Gramm(Metalle), und/oder mit einer maximalen Rate von 2 Gramm(O₃)/Stunde/Gramm(Metalle) in den Ausgangsstoff dosiert wird. Dementsprechend ist der Massenstrom an Ozon pro Stunde auch abhängig von der Masse der bereitgestellten Metalle im Ausgangsstoff. Die Metalle umfassen Ni und Co und/oder Mn, beispielsweise 10 g/l bis 20 g/l. Um Ozon mit einer gleichen Rate von z.B. 1,5 Gramm(O₃)/Stunde/Gramm(Metalle) bereitzustellen, muss der Massenstrom an Ozon z.B. verdoppelt werden, wenn die bereitgestellte Masse Ni und Co und/oder Mn verdoppelt wird.

Es gibt eine untere Grenze für die Dosierung von Ozon in die Suspension, um eine ausreichende Wirkung zu erzielen, während eine obere Grenze vor allem wirtschaftliche Gründe hat, da das vorgeschlagene Rühren mit der entsprechenden Scherrate die Wirksamkeit des zugeführten Ozons in ausreichender Weise erhöht.

Gemäß einer Weiterentwicklung wird vorgeschlagen, dass in Schritt (c) der liquide Ausgangsstoff mit einer Scherrate von größer als 25000s⁻¹, weiter vorzugsweise größer als 27000s⁻¹, weiter bevorzugt größer als 29000s⁻¹, beispielsweise 30000s⁻¹, in dem Ausgangsstoff gerührt wird. Die entsprechend weiter erhöhte Scherrate kann zu einem noch höheren ORP, z.B. >1200 mV, führen.

Vorzugsweise wird der pH-Wert des Ausgangsstoffs in Schritt (b) auf einen Wert im Bereich von 2 bis 3,5, weiter vorzugsweise im Bereich 2 bis 3,4, besonders vorzugsweise im Bereich von 2 bis 3, beispielsweise 3, eingestellt.

Mit dem vorgeschlagenen Bereich lassen sich eine besonders gute Trennung des Ni in Lösung von Co und/oder Mn erreichen. Höhere pH-Werte reduzieren die Selektivität für Ni, so dass die Qualität der Abtrennung reduziert wird. Niedrigere pH-Werte als 2 führen zu keiner effizienten Verbesserung der Trennung.

In einer bevorzugten Ausführungsform wird der pH-Wert des Ausgangsstoffs in Schritt (b) auf 3 eingestellt. Ein pH-Wert von 3 ermöglicht eine besonders gute Trennung von Ni in Lösung, wobei Co und/oder Mn als Oxide ausfallen. Mit dem vorgeschlagenen Verfahren lassen sich Rückgewinnungsgrade von >95% für Co, >99% für Mn und <3% für Ni erreichen. Als Ergebnis der Filtration in Schritt (d) werden Co und/oder Mn im Rückstand zurückgewonnen, wobei Ni im Filtrat von Schritt (d) extrahiert wird.

In einer bevorzugten Ausführungsform wird in Schritt (c) der pH-Wert im Bereich des Ausgangsstoffs aus Schritt (b) aufrechterhalten. Dies ermöglicht eine stabile Prozessführung und gleicht die Wirkung des zudosierten Ozons aus.

In einer vorteilhaften Ausführungsform wird in Schritt (c) der pH-Wert im Bereich des Ausgangsstoffs aus Schritt (b) durch Zugabe von Calciumhydroxid (Ca(OH)₂) aufrechterhalten und/oder eingestellt.

Ferner wird vorgeschlagen, dass in Schritt (c) der pH-Wert im Bereich des Ausgangsstoffs aus Schritt (b) durch Zugabe von Alkali- und/oder Erdalkali-Oxiden und/oder Alkali- und/oder Erdalkali-Hydroxiden, beispielsweise Calciumoxid (CaO) und/oder Natriumhydroxid (Na(OH)), aufrechterhalten und/oder eingestellt wird.

In einer bevorzugten Ausführungsform wird Kalk in Schritt (c) zugegeben, um den pH-Wert im Bereich des Ausgangsstoffs aus Schritt (b) aufrecht zu erhalten und/oder einzustellen.

Eine entsprechende Zugabe dieser basischen Stoffe kann die hauptsächlich säurebildenden Reaktionen in Schritt (c) ausgleichen. Vorzugsweise wird der pH-Wert in Schritt (b) im Bereich unter 4 weiter vorzugsweise unter 3,5 und besonders bevorzugt unter 3,4, beispielsweise 3, gehalten. Ferner wird vorzugsweise ein pH-Wert von 2 in Schritt (c) nicht unterschritten.

In einer Weiterentwicklung wird vorgeschlagen, dass der pH-Wert des Ausgangsstoffs in Schritt (b) durch Zugabe einer Säure, vorzugsweise Schwefelsäure (H₂SO₄), eingestellt wird.

Bei der Säure handelt es sich vorzugsweise um Schwefelsäure (H₂SO₄), die eine weitere vorteilhafte Wirkung auf das Verfahren zur Rückgewinnung von Ni haben kann, z.B. für die Kristallisation von Ni-Sulfat. Je nach den gewünschten Endprodukten des Verfahrens zur Rückgewinnung von Ni können jedoch auch andere Säuren geeignet sein.

Es wird weiterhin vorgeschlagen, dass in Schritt (c) der pH-Wert im Bereich des Ausgangsstoffs aus Schritt (b) durch Zugabe einer Säure, vorzugsweise Schwefelsäure (H₂SO₄), aufrechterhalten wird.

Gemäß einer vorteilhaften Ausführungsform wird vorgeschlagen, dass Schritt (c) für mindestens 3h, vorzugsweise mindestens 3,5h, beispielsweise 4h, durchgeführt wird.

Die Oxidation von Co und Mn ist von der Reaktionsdauer abhängig, wobei eine längere Reaktionsdauer eine vollständige Rückgewinnung aus der Lösung ermöglicht, z.B. nach 3 Stunden für Mn und nach 4 Stunden für Co. Die Co- und Mo-Oxide werden also ausgefällt, nachdem sie in der Lösung gelöst wurden. Daher ermöglicht die Durchführung von Schritt (c) für die oben genannte Dauer eine sehr hohe Selektivität des Extraktionsverfahrens.

Während Co und Mn mit der oben vorgeschlagenen Reaktionsdauer, z.B. 4 Stunden, vollständig aus der Lösung zurückgewonnen werden können, steigt die Ni-Extraktion bei längerer Dauer weiter an. Somit wird die Extraktionsrate für Ni mit zunehmender Dauer weiter erhöht.

In einer alternativen Ausführungsform wird vorgeschlagen, dass Schritt (c) solange durchgeführt wird, bis 95%, vorzugsweise 99%, des vorhandenen Co und Mn aus der Lösung ausgefallen sind, was vorzugsweise durch eine Analyse der Flüssigkeit bestimmt werden kann. Die Bestimmung des am Anfang vorhandenen Co und Mn kann insbesondere bei einem vorgelagerten sauren Laugungsschritt mit einem pH-Wert unter 2, der Ni, Co und Mn in Lösung bringt, durch eine Analyse der Flüssigkeit bestimmt werden.

Gemäß einer Weiterentwicklung wird vorgeschlagen, dass in Schritt (c) die Temperatur des Ausgangsstoffs im Bereich von 40°C bis 60°C, vorzugsweise 50°C, liegt.

Eine Temperatur zwischen 40°C und 60°C, beispielsweise 50°C, ermöglicht hohe Extraktionsraten, da durch die Temperatur eine ausreichende Reaktivität bei gleichzeitig limitierter Zersetzung des Ozons in Wasser, welche mit steigender Temperatur zunimmt, ermöglicht wird.

Gemäß einer vorteilhaften Weiterentwicklung wird vorgeschlagen, dass
- in einem Schritt (e) Schwefelsäure (H₂SO₄) zu dem Filtrat aus Schritt (d) zugegeben wird; und
- die Konzentration der Schwefelsäure (H₂SO₄) auf mindestens 500 g/l erhöht wird, um Ni-Sulfat zu kristallisieren.

Das kristallisierte Ni-Sulfat wird vorzugsweise durch Filtration abgetrennt.

In einer alternativen Weiterentwicklung wird vorgeschlagen, dass
- in einem Schritt (f) eine Base, vorzugsweise Natriumhydroxid (NaOH) und/oder Calciumhydroxid (Ca(OH)₂) und/oder Calciumoxid (CaO), zu dem Filtrat aus Schritt (d) zugegeben wird; und
- der pH-Wert des Filtrats von Schritt (d) auf einen pH-Wert über 9, weiter vorzugsweise auf einen pH-Wert über 10, angehoben wird.

Ein pH-Wert von mehr als 9, beispielsweise 10, vorzugsweise ein pH-Wert von mehr als 10, ermöglicht die vollständige Ausfällung des Ni(II) als Hydroxid aus dem Filtrat aus Schritt (d) .

Auf diese Weise kann der Effekt des gelösten Ni umgekehrt werden, wodurch Ni ausgefällt und abgefiltert werden kann.

Die Anhebung des pH-Wertes des Filtrats mit einer Base wird vorzugsweise bei einer Temperatur von 25°C bis 70°C durchgeführt.

Die pH-Einstellung mit Na-haltigen Basen, insbesondere Natriumhydroxid, belässt F und P in der Lösung, was das Abtrennen von F aus dem Rückstand und die weitere Verarbeitung des Rückstands ermöglicht, was vorteilhafterweise die Anreicherung von HF in anderen nachgeschalteten Prozessen verhindern kann.

In einer vorteilhaften Ausführungsform wird in Schritt (c) neben der Dosierung von Ozon als Oxidationsmittel Sauerstoff (O₂) zugeführt.

Ferner wird eine Anlage zur Durchführung eines Verfahrens nach einem der Ansprüche 1 bis 15 vorgeschlagen.

Im Folgenden wird die Erfindung anhand von bevorzugten Ausführungsformen unter Bezugnahme auf die Zeichnungen erläutert. Darin zeigt
- Fig. 1: den Extraktionsgrad EE in % von Li, Ni, Co und Mn über dem pH-Wert;
- Fig. 2: die Lösungskonzentration SC in g/l von Li, Ni, Co und Mn über die Zeit in min; und
- Fig. 3: den Rückgewinnungsgrad Ni RE in % von Ni über dem pH-Wert.

Die Bereitstellung eines liquiden Ausgangsstoffs, der ungelöstes und/oder gelöstes Ni sowie Co und/oder Mn in Lösung und/oder Suspension enthält, gemäß Schritt (a) kann auf verschiedene Weisen erfolgen. Die genannten Metalle können in unterschiedlichen Verbindungen und/oder in elementarer Form in der Suspension vorliegen.

Ein möglicher Weg zur Bereitstellung kann aus primären Quellen erfolgen, wobei Ni-haltiges Erz in Suspension und/oder in Lösung gebracht wird. Das Ni-haltige Erz wird hierfür im Rahmen der Bereitstellung des liquiden Ausgangsstoffs gemäß Schritt (a) in einem Teilverfahrensschritt zunächst mechanisch zerkleinert. Das Ni-haltige Erz weist in Regel auch Co auf. Weiterhin kann das Ni-haltige Erz häufig neben dem Co auch Mn aufweisen. Daneben kann in primären Quellen auch Ni-haltiges Erz zusammen mit Mn und ohne Co oder nur mit sehr geringen Anteilen Co auftreten. Sofern in Ni-haltigen Erzen Co und/oder Mn auftreten, kann das vorgeschlagene Verfahren zu Extraktion und Separation von Ni von Co und/oder Mn angewendet werden. Ni-haltige Erze sind in der Regel frei von Li.

In einer vorteilhaften Variante kann an dieser Stelle ein saurer Laugungsschritt eingefügt werden, wobei das liquide Ausgangsmaterial mit beispielsweise Schwefelsäure (H₂SO₄) und vorzugsweise SO₂ (gasförmig) in einem sauren Laugungsschritt gelaugt wird. Die Temperatur beträgt beispielsweise 70 °C und das ORP < 200 mV. Der pH-Wert wird auf < 2 eingestellt, so dass sowohl Ni also auch Co und/oder Mn in Lösung gebracht werden. Das Filtrat dieses sauren Laugungsschritts bildet einen möglichen liquiden Ausgangstoff, der Ni sowie Co und/oder Mn in Lösung enthält.

Gemäß Schritt (b) wird der pH-Wert des liquiden Ausgangsstoffs auf einen Wert von 2 bis 4, vorzugsweise auf einen Wert von 2 bis 3,5 eingestellt. Ein pH-Wert von 3 ist hierbei besonders vorteilhaft. Der pH-Wert kann beispielsweise durch Zugabe von Calciumhydroxid (Ca(OH)₂) oder Schwefelsäure (H₂SO₄) eingestellt werden.

Weiterhin wird gemäß Schritt (c) Ozon (O₃) als Oxidationsmittel zu dem liquiden Ausgangstoff dosiert, wobei der liquide Ausgangsstoff intensiv mit einer Scherrate von mehr als 11000s⁻¹ gerührt wird. Co-Oxide und Mn-Oxide fallen aus der Lösung aus, während Ni in Lösung verbleibt. Das intensive Rühren unter Zudosierung von Ozon mit der entsprechend sehr hohen Scherrate wird in diesem vorteilhaften Ausführungsbeispiel für 4h aufrechterhalten. Weiterhin wird die Temperatur in diesem vorteilhaften Ausführungsbeispiel bei 40°C bis 60°C, vorzugsweise 50°C gehalten.

Gemäß Schritt (d) wird die gebildete Suspension anschließend filtriert. Der Rückstand enthält hierbei Co-Oxide und/oder Mn-Oxide und das Filtrat gelöstes Ni, wodurch Ni sehr selektiv von Co und Mn getrennt werden kann. Die Rückgewinnungsquoten im Rückstand liegen bei > 95 % Co, > 99 % Mn, < 3 % Ni.

In einer alternativen Verfahrensroute erfolgt das Bereitstellen eines liquiden Ausgangsstoffs der ungelöstes und/oder gelöstes Ni sowie Co und/oder Mn in Lösung und/oder Suspension enthält, gemäß Schritt (a) aus sekundären Quellen. Solche sekundären Quellen werden zu einer so genannten schwarzen Masse aufbereitet, die ein Gemisch aus Lithium-Ionen-Batterieschrott und/oder Schrott aus Batterieproduktionsprozessen ist, das zu einem feinen Pulver verarbeitet wird. So enthält die schwarze Masse in der Regel eine Mischung aus aktiven Anoden- und/oder Kathodenmaterialien von Lithium-Ionen-Batterien. Dementsprechend liegt in der schwarzen Masse bei der entsprechenden Batteriechemie, z.B. NMC, Ni sowie Co und Mn vor. Bei den entsprechenden Ausgangsstoffen und Batteriechemie der Batterien oder Produktionsreste, die als sekundäre Quellen dem Recycling zugeführt werden, kann beispielweise auch Ni und Co und kein Mn oder Ni und Mn und kein Co vorliegen. Die Anteile können hierbei in einem weiten Bereich variieren, beispielsweise können Ni, Co und Mn in einem Verhältnis von ungefähr 1:1:1 vorliegen. Außerdem kann die schwarze Masse Kunststoffe und/oder Stromleiter wie Kupfer und/oder Aluminium enthalten.

Die schwarze Masse wird als metallhaltiges, insbesondere Ni sowie Co und/oder Mn haltiges, Ausgangsmaterial bereitgestellt. Die schwarze Masse wurde zu einem Pulver verarbeitet. Die Mineralogie der schwarzen Masse kann in Abhängigkeit von den Ausgangsmaterialien bzw. Schrottmaterialien variieren.

In einem vorteilhaften Ausführungsbeispiel wird die schwarze Masse zunächst einem sauren Laugungsschritt zugeführt, so dass die schwarze Masse mit Schwefelsäure (H₂SO₄) und vorzugsweise SO₂ (gasförmig) in einem sauren Laugungsschritt gelaugt wird. Die Temperatur beträgt beispielsweise 70 °C und das ORP < 200 mV. Der pH-Wert wird auf < 2 eingestellt, so dass sowohl Ni also auch Co und/oder Mn in Lösung gebracht werden. Das Filtrat des sauren Laugungsschritts bildet einen liquiden Ausgangstoff, der Ni sowie Co und/oder Mn in Lösung enthält.

Es können beispielsweise 50l dieses Filtrats aus dem sauren Laugungsschritt als liquider Ausgangsstoff bereitgestellt werden. In diesem liquiden Ausgangsmaterial aus der schwarzen Masen kann beispielsweise die in Tabelle 1 ausgeführte Lösungskonzentration für die genannten Elemente vorliegen.

**Tabelle 1:**

| Element | Al | Ca | Co | Cu | Fe | Li |
|---|---|---|---|---|---|---|
| [g/l] | 1,67 | 0,838 | 22,7 | 5,74 | 0,411 | 0,824 |

| Element | Mn | Ni | F | Na | | |
|---|---|---|---|---|---|---|
| [g/l] | 10,0 | 14,6 | 1,979 | 1,92 | | |

Der pH-Wert wird durch beispielsweise Zugabe von Kalk auf einen Wert zwischen 3 und 4, beispielsweise 3 oder 3,5, eingestellt. Zu dem liquiden Ausgangsstoff wird Ozon eingeleitet, wobei beispielsweise 0,1 bis 0,3 g Ozon pro g(Co und/oder Mn) in der Lösung pro Stunde zugegeben werden. Während der Zugabe von Ozon wird die Lösung mit einer Scherrate 11000s⁻¹, in diesem vorteilhaften Ausführungsbeispiel mit einer Scherrate von 34000s⁻¹, gerührt und gemixt. Während des Rührens und der Zudosierung von Ozon wird der pH-Wert durch Zugabe von Kalk in einem Bereich zwischen 3 und 4 gehalten. Die Temperatur wird auf 50°C durch Heizung des Behälters gehalten.

Hierdurch fallen Co-Oxide und Mn-Oxide aus der Lösung aus, während Ni in Lösung verbleibt. Diese Reaktion wird für mehrere Stunden aufrechterhalten; beispielsweise bis mehr als 99% des Co und Mn aus der Lösung zurückgewonnen wurden, was durch Analyse der Lösung bestimmt werden kann. Die entstehende Suspension wird anschließend gefiltert. Das Filtrat weist nach diesem Schritt die in Tabelle 2 ausgeführte Lösungskonzentration für die genannten Elemente auf.

**Tabelle 2:**

| Element | Al | Ca | Co | Cu | Fe | Li |
|---|---|---|---|---|---|---|
| [g/l] | 0,888 | 0,574 | 0,025 | 1,361 | 0,009 | 1,206 |

| Element | Mn | Ni | F | Na | | |
|---|---|---|---|---|---|---|
| [g/l] | 0,007 | 12,675 | 1,752 | 4,197 | | |

Der feste Rückstand weist dabei die folgenden Anteile gemäß Tabelle 3 auf.

**Tabelle 3:**

| Element | Al | Ca | Co | Cu | Fe | Li |
|---|---|---|---|---|---|---|
| % | 0,92 | 14,25 | 14,00 | 3,25 | 0,06 | 0,03 |

| Element | Mn | Ni | F | | | |
|---|---|---|---|---|---|---|
| % | 6,03 | 1,08 | 0,62 | | | |

Dementsprechend kann durch das Verfahren ein überwiegend Co und Mn haltiges festes Produkt erreicht, wohingegen andere Basismetalle überwiegend im Filtrat vorliegen.

In einem weiteren vorteilhaften Ausführungsbeispiel wird aus dem bereitgestellten liquiden Ausgangsstoff zunächst Li extrahiert, so dass das Li nicht in weitere Prozesse verschleppt wird und wiederverwendet werden kann, was im Folgenden beschrieben wird.

Zwei Mineralogien der schwarzen Masse sind zum Beispiel wie folgt:
Schwarze Masse #1: C₁; Co_{0,2069} Li_{0,756} Ni_{0,793} O₂; Ni₁O₁; Al₂O₃;
Schwarze Masse #2: C₁; Fe₁Ni₃; Mn₁O₁; Cu_{0,8}Fe_{0,2}; C_{0,5} H_{8,9} Fe₃ O_{8,95}; Al₁ Li₁O₂; Cu₁ O₁;

Eine schwarze Masse, die in diesem Beispiel verwendet wird, kann eine Zusammensetzung der Elemente gemäß Tabelle 4 aufweisen:

**Tabelle 4:**

| Element | Li | Ni | Co | Mn | F | P |
|---|---|---|---|---|---|---|
| schwarze Masse [Gew. %] | 4,3 | 13,5 | 14,6 | 9,9 | 2,3 | 0,37 |

Der Rest kann zum Beispiel Elemente wie C, H, O, Fe, Al, Cu enthalten.

Die schwarze Masse wird zur Bereitstellung des liquiden Ausgangsstoffs gemäß Schritt (a) in Wasser suspendiert, wobei beispielsweise 50 g der schwarzen Masse mit der Zusammensetzung in Tabelle 4 in 1 l Wasser suspendiert werden.

Die Suspension wird in diesem vorgelagerter Schritt zur Extraktion von Li auf 70°C erhitzt und Ozon (O₃) mit 0,9 l/min in die Suspension dosiert, wobei die Suspension während der Ozondosierung gerührt wird. Die Suspension wird intensiv gerührt, wodurch eine Scherrate in der Suspension von ca. 29000s⁻¹ entsteht. Der pH-Wert pendelt sich auf pH 8 ein. Die Reaktion bei 70°C wird nach 4 Stunden beendet.

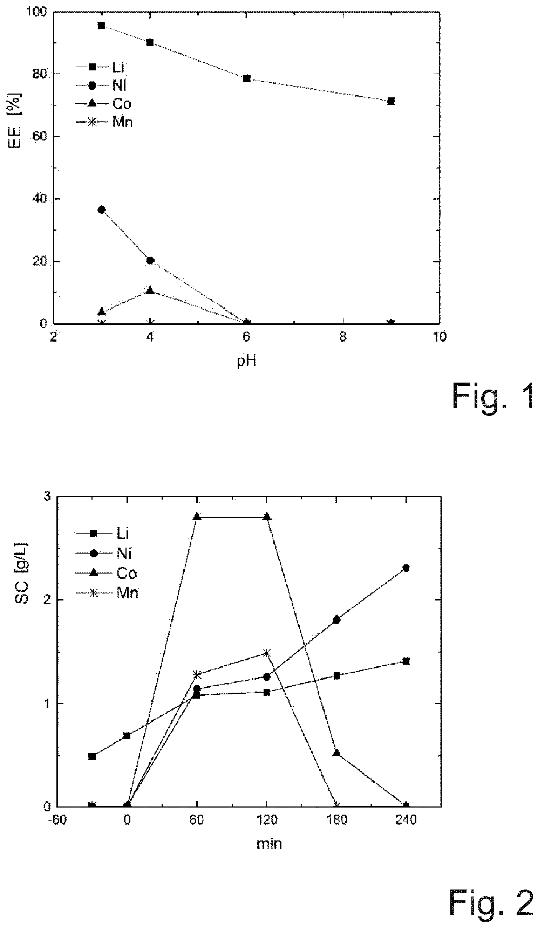

In einem folgenden Schritt wird die Suspension filtriert, wobei das Filtrat etwa 70% des Lithiums der ursprünglichen schwarzen Masse enthält, das in Wasser gelöst ist. Dementsprechend enthält der Rückstand etwa 30 % des Lithiums der ursprünglichen schwarzen Masse, wobei der Rückstand weiterhin im Wesentlichen das gesamte Ni, Co, Mn enthält, so dass keines dieser wertvollen Metalle verloren geht und eine hohe Reinheit des Li in der Lösung für die weitere Verarbeitung des Li Verfügung steht. Dies ist auch in Figur 1 dargestellt, die den Extraktionsgrad EE von Li, Ni, Co und Mn in Abhängigkeit vom pH-Wert zeigt. Darin wird die hohe Selektivität für Li des Laugungsverfahrens mit Ozon bei erhöhten Temperaturen der Suspension von schwarzer Masse in Wasser für pH-Werte größer als 6 gezeigt, wobei das Rühren der Suspension mit sehr hohen Scherrate bei gleichzeitiger Zufuhr von Ozon zur Suspension wesentlich ist, um die beabsichtigte Oxidation der schwarzen Masse mit Ozon zu erreichen.

In einem weiteren Ausführungsbeispiel wird als vorgelagerter Schritt aus dem bereitgestellten liquiden Ausgangsstoff zunächst ebenfalls Li extrahiert.

Abweichend von dem ersten Ausführungsbeispiel zur Extraktion von Li wird eine Säure zu der Suspension aus schwarzer Masse und Wasser zugegeben, nämlich der Dosierung von Ozon in die Suspension, während die Suspension gerührt wird. In dieser bevorzugten Ausführungsform wird 50%ige Schwefelsäure (H₂SO₄) zugegeben, um den pH-Wert auf 4 zu senken. Die Reaktion wird dann 4 Stunden lang fortgesetzt.

Fig. 2 zeigt die Lösungskonzentration SC in g/l von Li, Ni, Co und Mn über die Zeit in min, und dass der Grad der Oxidation von Co und Mn von der Reaktionsdauer abhängt. Co und Mn werden zu Co(III)- und Mn(IV)-Oxiden oxidiert, so dass bei längerer Dauer Co und Mn vollständig aus der Lösung zurückgewonnen werden können. Die Extraktion von Li und Ni nimmt mit einer längeren Dauer bei dem oben genannten pH-Wert zu.

Daher kann die Extraktionsrate für Li auf über 90 % erhöht werden, verglichen mit ca. 70 % bei dem ersten Ausführungsbeispiel, bei der der Suspension keine zusätzliche Säure zugeführt wird. Dies steht auch im Einklang mit den Daten aus Fig. 1. Daher wird in diesem zweiten Ausführungsbeispiel eine höhere Extraktionsrate für Li erreicht, während eine gewisse Selektivität des Verfahrens aufgegeben wird. Allerdings wird Ni teilweise als Ni(II) extrahiert.

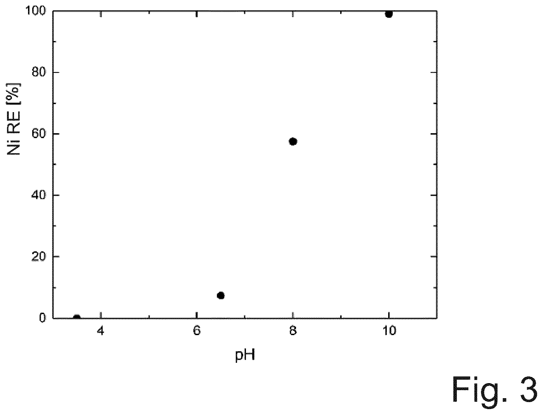

Nach der obigen Reaktion wird in diesem vorteilhaften Ausführungsbeispiel zu 500 ml der obigen Suspension bei 50 °C eine 12-ml-Suspension von Calciumoxid (CaO) zugegeben, wodurch der pH-Wert auf 10 erhöht wird. Die Reaktion ist nach 1,5 Stunden beendet. Das Ni in der Lösung wird ausgefällt, wobei der Grad der Ausfällung Ni RE über dem pH-Wert in Fig. 3 dargestellt ist. Demnach führt eine Erhöhung des pH-Wertes auf pH 10 zu einer vollständigen Rückgewinnung des gelösten Ni.

Auch andere Basen, wie Natriumhydroxid (NaOH) und/oder Calciumhydroxid (Ca(OH)₂), können verwendet werden. Eine typische Lösungskonzentration nach der pH-Einstellung auf pH 10 ist in Tabelle 5 für verschiedene Basen dargestellt.

**Tabelle 5:**

| Base | Li | Ni | Co | Mn | Cu | Al |
|---|---|---|---|---|---|---|
| Ca-basiert [g/l] | 1,63 | 0,00 | 0,00 | 0,00 | 0,00 | 0,00 |
| Na-basiert [g/l] | 1,51 | 0,00 | 0,00 | 0,00 | 0,00 | 0,00 |

| Base | Fe | F | P | Ca | Na | |
|---|---|---|---|---|---|---|
| Ca-basiert [g/l] | 0,00 | 0,24 | 0,00 | 0,30 | 0,00 | |
| Na-basiert [g/l] | 0,00 | 0,39 | 0,047 | 0,00 | 0,99 | |

Wie bei der ersten Ausführungsform wird die Suspension in einem nachfolgenden Schritt filtriert, wobei das Filtrat der zweiten Ausführungsform über 90% des Lithiums der ursprünglichen schwarzen Masse enthält, das in Wasser gelöst ist. Somit ist der Rückstand noch stärker an Li verarmt und enthält weniger als 10 % des Lithiums der ursprünglichen schwarzen Masse.

Wie aus Tabelle 5 hervorgeht, kann auf diese Weise zunächst Li mit einer sehr hohen Extraktionsrate und ohne Verluste der wertvollen Metalle Ni, Co und Mn aus dem liquiden Ausgangsmaterial extrahiert werden, so dass das Li nicht in die Extraktion von Co-Oxiden und/oder Mn-Oxiden und die Abtrennung von Ni in gelöstem Zustand verschleppt wird.

Zur Bereitstellung des liquiden Ausgangsstoffs, der ungelöstes und/oder gelöstes Ni sowie Co und/oder Mn in Lösung und/oder Suspension enthält, kann der liquide Ausgangsstoff sowohl aus primären als auch aus sekundären Quellen in einem vorteilhaften Ausführungsbeispiel beispielsweise mit Schwefelsäure (H₂SO₄) und vorzugsweise SO₂ (gasförmig) in einem sauren Laugungsschritt gelaugt werden. Dies kann unabhängig von einer vorherigen Li Extraktion gemäß den beiden aufgeführten Ausführungsbeispielen für sekundäre Quellen erfolgen, so dass diese Li Extraktion nicht zwingend erforderlich ist. Die Temperatur beträgt beispielsweise 70 °C und das ORP < 200 mV. Der pH-Wert wird auf < 2 eingestellt, so dass sowohl Ni also auch Co und/oder Mn in Lösung gebracht werden, wodurch ein liquider Ausgangsstoff gemäß Schritt (a) bereitgestellt werden kann.

Sofern der liquide Ausgangsstoff beispielsweise aus sekundären Quellen stammt und entsprechend einen Anteil Graphit aufweist, verbleibt dieser im Rückstand. Die Suspension wird nach dem Auslaugen vorzugsweise nicht gefiltert.

In diesem vorteilhaften Ausführungsbeispiel wird nun Fluor (F) aus der sauren Laugung durch Zugabe einer Ca-Quelle, z.B. Calciumhydroxid (Ca(OH)₂), Calciumoxid (CaO) und/oder Calciumcarbonat (CaCO₃), ausgefällt. Die HF und F-Ion werden mit Ca als CaF₂ ausgefällt. Nach der Ausfällung wird die Suspension filtriert.

Gemäß Schritt (b) wird der pH-Wert des liquiden Ausgangsstoffs auf einen Wert von 2 bis 4, vorzugsweise auf einen Wert von 2 bis 3,5 eingestellt. Ein pH-Wert von 3 ist hierbei besonders vorteilhaft. Der pH-Wert kann beispielsweise durch Zugabe von Calciumhydroxid (Ca(OH)₂) oder Schwefelsäure (H₂SO₄) eingestellt werden.

Weiterhin wird gemäß Schritt (c) Ozon (O₃) als Oxidationsmittel zu dem liquiden Ausgangstoff dosiert, wobei der liquide Ausgangsstoff intensiv mit einer Scherrate von mehr als 11000s⁻¹, beispielsweise 12000s⁻¹ oder 29000s⁻¹, gerührt wird. Co-Oxide und Mn-Oxide fallen aus der Lösung aus, während Ni in Lösung verbleibt. Das intensive Rühren unter Zudosierung von Ozon mit der entsprechend sehr hohen Scherrate wird für 4h aufrechterhalten. Die Temperatur wird in diesem vorteilhaften Ausführungsbeispiel bei 40°C bis 60°C, vorzugsweise 50°C gehalten.

Gemäß Schritt (d) wird die Suspension anschließend filtriert. Der Rückstand enthält hierbei Co-Oxide und/oder Mn-Oxide und das Filtrat gelöstes Ni, wodurch Ni sehr selektiv von Co und Mn getrennt werden kann. Die Rückgewinnungsquoten im Rückstand liegen bei > 95 % Co, > 99 % Mn, < 3 % Ni.

In einem vorteilhaften nachfolgenden Schritt, der unabhängig von der Art der Bereitstellung gemäß Schritt (a) ist, wird dem Ni-haltigen Filtrat in einem Schritt (e) Schwefelsäure (H₂SO₄) und/oder rezirkulierte Säure bzw. schwarze Säure in Konzentrationen von 150 bis 400 g/L H₂SO₄ zugegeben. Die Verdampfungstemperatur beträgt > 100 °C. Der Verdampfungsgrad soll eine H₂SO₄-Konzentration von 800 g/L erreichen. Ni(II)-sulfat kristallisiert aus der Lösung aus und wird zurückgewonnen. Die gefilterte Lösung wird als schwarze Säure bezeichnet und vorzugsweise in die saure Laugungsstufe zurückgeführt.

In einem alternativen nachfolgenden Schritt (f), der ebenfalls unabhängig von der Art der Bereitstellung gemäß Schritt (a) ist, wird dem Ni-haltigen Filtrat eine Base, vorzugsweise Natriumhydroxid (NaOH) und/oder Calciumhydroxid (Ca(OH)₂) und/oder Calciumoxid (CaO), zugegeben und der pH-Wert oder der pH-Wert des Filtrats von Schritt (d) auf einen pH-Wert von 10 angehoben wird.

Insbesondere ein pH-Wert von mehr als 9, beispielsweise 10, vorzugsweise ein pH-Wert von mehr als 10, ermöglicht die vollständige Ausfällung des Ni(II) als Hydroxid. Die Anhebung des pH-Wertes der Suspension oder des Filtrats mit einer Base wird vorzugsweise bei einer Temperatur von 25°C bis 70°C durchgeführt. Dementsprechend kann alternativ zu Ni(II)-sulfat auch Ni(II)-hydroxid zurückgewonnen werden.

## Patentansprüche

1. Verfahren zur Gewinnung oder Rückgewinnung von Metallen aus einem liquiden Ausgangsstoff, **gekennzeichnet durch** die folgenden Schritte in der folgenden Reihenfolge:
- Schritt (a): Bereitstellung eines liquiden Ausgangsstoffs, der ungelöstes und/oder gelöstes Ni sowie Co und/oder Mn in Lösung und/oder Suspension enthält;
- Schritt (b): Einstellen eines pH-Werts des Ausgangsstoffs im Bereich von 2 bis 4;
- Schritt (c): Dosierung von Ozon als Oxidationsmittel zu dem Ausgangsstoff, während der Ausgangsstoff mit einer Scherrate von größer als 11000s⁻¹ in dem Ausgangsstoff gerührt wird;
- Schritt (d): Filtrieren und Abtrennen des Rückstands, der Co-Oxide und/oder Mn-Oxide enthält, von dem Filtrat, das gelöstes Ni enthält.

2. Verfahren nach Anspruch 1, **dadurch gekennzeichnet, dass** in Schritt (c) der Ausgangsstoff mit einer Scherrate von größer als 25000s⁻¹ in dem Ausgangsstoff gerührt wird.

3. Verfahren nach Anspruch 1 oder 2, **dadurch gekennzeichnet, dass** der pH-Wert des Ausgangsstoffs in Schritt (b) auf einen Wert im Bereich von 2 bis 3,5, vorzugsweise im Bereich von 2 bis 3, eingestellt wird.

4. Verfahren nach einem der Ansprüche 1 bis 3, **dadurch gekennzeichnet, dass** der pH-Wert des Ausgangsstoffs in Schritt (b) auf 3 eingestellt wird.

5. Verfahren nach einem der vorangehenden Ansprüche, **dadurch gekennzeichnet, dass** in Schritt (c) der pH-Wert im Bereich des Ausgangsstoffs aus Schritt (b) aufrechterhalten wird.

6. Verfahren nach Anspruch 5, **dadurch gekennzeichnet, dass** in Schritt (c) der pH-Wert im Bereich des Ausgangsstoffs aus Schritt (b) durch Zugabe von Calciumhydroxid (Ca(OH)₂) aufrechterhalten und/oder eingestellt wird.

7. Verfahren nach Anspruch 5 oder 6, **dadurch gekennzeichnet, dass** in Schritt (c) der pH-Wert im Bereich des Ausgangsstoffs aus Schritt (b) durch Zugabe von Alkali- und/oder Erdalkali-Oxiden und/oder Alkali- und/oder Erdalkali-Hydroxiden, beispielsweise Calciumoxid (CaO) und/oder Natriumhydroxid (Na(OH)), aufrechterhalten und/oder eingestellt wird.

8. Verfahren nach einem der vorangehenden Ansprüche, **dadurch gekennzeichnet, dass** der pH-Wert des Ausgangsstoffs in Schritt (b) durch Zugabe einer Säure, vorzugsweise Schwefelsäure (H₂SO₄), eingestellt wird.

9. Verfahren nach einem der vorangehenden Ansprüche, **dadurch gekennzeichnet, dass** in Schritt (c) der pH-Wert im Bereich des Ausgangsstoffs aus Schritt (b) durch Zugabe einer Säure, vorzugsweise Schwefelsäure (H₂SO₄), aufrechterhalten und/oder eingestellt wird.

10. Verfahren nach einem der vorangehenden Ansprüche, **dadurch gekennzeichnet, dass** Schritt (c) für mindestens 3h, vorzugsweise mindestens 3,5h, beispielsweise 4h, durchgeführt wird.

11. Verfahren nach einem der vorangehenden Ansprüche, **dadurch gekennzeichnet, dass** in Schritt (c) die Temperatur des Ausgangsstoffs im Bereich von 40°C bis 60°C, vorzugsweise 50°C, liegt.

12. Verfahren nach einem der vorangehenden Ansprüche, **dadurch gekennzeichnet, dass**
- in einem Schritt (e) Schwefelsäure (H₂SO₄) zu dem Filtrat aus Schritt (d) zugegeben wird; und
- die Konzentration der Schwefelsäure (H₂SO₄) auf mindestens 500 g/l erhöht wird, um Ni-Sulfat zu kristallisieren.

13. Verfahren nach einem der Ansprüche 1 bis 11, **dadurch gekennzeichnet, dass**
- in einem Schritt (f) eine Base, vorzugsweise Natriumhydroxid (NaOH) und/oder Calciumhydroxid (Ca(OH)₂) und/oder Calciumoxid (CaO), zu dem Filtrat aus Schritt (d) zugegeben wird; und
- der pH-Wert des Filtrats von Schritt (d) auf einen pH-Wert über 9, weiter vorzugsweise auf einen pH-Wert über 10, angehoben wird.

14. Verfahren nach einem der vorangehenden Ansprüche, **dadurch gekennzeichnet, dass** in Schritt (a) Ni-haltiges Erz mechanisch zerkleinert wird.

15. Verfahren nach einem der vorangehenden Ansprüche, **dadurch gekennzeichnet, dass** in Schritt (c) neben der Dosierung von Ozon als Oxidationsmittel Sauerstoff (O₂) zugeführt wird.

16. Anlage zur Durchführung eines Verfahrens nach einem der Ansprüche 1 bis 15.
